# EUROPEAN PATENT SPECIFICATION

(11) **EP 2 827 406 B1**
(45) Date of publication and mention of the grant of the patent: **12.04.2017**
(21) Application number: 14153492.5
(22) Date of filing: 31.01.2014
(51) Int. Cl.: H01M 2/22

(54) **Rechargeable battery**
Wiederaufladbare Batterie
Batterie rechargeable

(30) Priority: 18.07.2013 US 201361847798 P; 07.01.2014 US 201414149764
(43) Date of publication of application: 21.01.2015
(73) Proprietor: Samsung SDI Co., Ltd., Yongin-si, Gyeonggi-do (KR)
(72) Inventor: Lee, Chi-Young, Yongin-si Gyeonggi-do (KR); Yoo, Seok-Yoon, Yongin-si Gyeonggi-do (KR); Kwak, Yun-Jung, Yongin-si Gyeonggi-do (KR); Oh, Jeong-Won, Yongin-si Gyeonggi-do (KR)
(74) Representative: Taor, Simon Edward William

(56) References cited:
- EP-A1- 2 602 847
- EP-A1- 2 772 963
- EP-A2- 0 413 867
- EP-A2- 2 515 362
- WO-A1-2012/029944
- US-A1- 2004 038 122
- US-B1- 6 193 765

## Description

The described technology relates generally to a rechargeable battery, and more particularly to a rechargeable battery including a current collector having a structure of improved thermal conductivity and durability.

A rechargeable battery is a battery that can be charged and discharged unlike a primary battery that is incapable of being charged. A rechargeable battery having a low capacity is used in a small portable electronic device such as a mobile phone, a laptop computer, or a camcorder. A battery having a large capacity is used as a power source for driving a motor or an electric power storing device having a large capacity in a hybrid vehicle.

Recently, a high power rechargeable battery including a non-aqueous electrolyte having a high energy density has been developed. The high power rechargeable battery is constituted by a battery module having a large capacity and includes a plurality of rechargeable batteries connected in series in order to be used to drive devices requiring large electric power, for example, motors for electric vehicles. The rechargeable battery may have cylindrical and angular shapes.

Further, a current collecting member electrically connecting an electrode assembly received in a case and a terminal protruding to the outside of the case is required in order to charge or discharge the rechargeable battery.

Accordingly, the current collecting member is positioned between the terminal and the electrode assembly when the rechargeable battery is charged or discharged, thus electrically connecting the terminal and the electrode assembly.

However, when the rechargeable battery is repeatedly charged and discharged, even though a current passing through the current collecting member is a low current, a temperature of the current collecting member is increased to deform the current collecting member. Further, when the rechargeable battery is charged or discharged, if a high current flows through the current collecting member, the current collecting member is damaged.

US2004038122 discloses a laminate cell in which the heat capacity of a portion of the positive tab, onto which a plurality of the positive leads are joined, and the heat capacity of a portion of the negative tab, onto which a plurality of the negative leads are joined, are made larger than that of other portions of the positive tab and the negative tab.

The above information disclosed in this Background section is only for enhancement of understanding of the background of the described technology and therefore it may contain information that does not form the prior art that is already known in this country to a person of ordinary skill in the art.

The described technology has been made in an effort to provide a rechargeable battery including a current collector having a structure of improved heat capacity, thermal conductivity, and durability. A rechargeable battery according to the invention includes a case. An electrode assembly is received in the case. A first terminal unit is electrically connected to the electrode assembly. A first current collector includes a first portion coupled with the electrode assembly, a second portion coupled with the first terminal unit, and a connection unit connecting the first portion and the second portion and having a thickness that is larger than the thickness of the first portion.

Further, the thickness of the connection unit may be larger than a thickness of the second portion.

Further, the connection unit includes a body connecting the first portion and the second portion where the body may have the same thickness as the first portion, and a reinforcement member coupled with the body.

Further, the thickness of the reinforcement member may be the same as the thickness of the body.

Further, the reinforcement member extends from the body and is bent to be coupled with the body.

Further, the reinforcement member may include a first reinforcement member coupled with a first surface of the body and a second reinforcement member coupled with a second surface positioned at an opposite side of the first surface of the body.

Further, the first reinforcement member may extend in parallel to the first surface of the body and the second surface of the body between the first surface of the body and the second surface of the body and be then bent to be coupled with the first surface of the body. The second reinforcement member may extend in parallel to the first reinforcement member from a surface positioned at an opposite side of an extension surface of the first reinforcement member and be then bent to be coupled with the second surface of the body.

Further, the electrode assembly may include a plurality of electrode assemblies. The body may include a first body unit connected to the first portion and a second body unit connected to the second portion. The first portion of the current collector may include a plurality of collector shoes extending from the first body unit of the connection unit to be each coupled with the plurality of electrode assemblies.

Further, the reinforcement member may have the same thickness as the body including the first body unit and the second body unit.

Further, the reinforcement member may extend in parallel to the collector shoes from the first body unit and be then bent to be coupled with the body.

Further, the reinforcement member may have a shape corresponding to the shape of the body including the first body unit and the second body unit.

Further, the reinforcement member may extend in parallel to the collector shoes from the first body unit and be then bent to be coupled with the first body unit and the second body unit.

According to the present invention, there is provided a rechargeable battery as set out in claim 1. Preferred features are set out in claims 2 to 13.

According to the embodiments of the present invention, it is possible to provide a rechargeable battery including a current collector having improved thermal conductivity and durability.
FIG. 1 is a perspective view of a rechargeable battery according to a first exemplary embodiment of the present invention.
FIG. 2 is a cross-sectional view taken along the line II-II of FIG. 1.
FIGS. 3A and 3B are perspective views of a first current collector according to the first exemplary embodiment of the present invention.
FIG. 4 is a perspective view of a rechargeable battery according to a second exemplary embodiment of the present invention.
FIG. 5 is a partially exploded perspective view of the rechargeable battery according to the second exemplary embodiment of the present invention.
FIGS. 6A and 6B are perspective views of a first current collector according to the second exemplary embodiment of the present invention.
FIGS. 7A and 7B are perspective views of a first current collector according to a third exemplary embodiment of the present invention.

Hereinafter, exemplary embodiments of the present invention will be described in detail with reference to the accompanying drawings so that those skilled in the art may easily practice the present invention. As those skilled in the art would realize, the described embodiments may be modified in various different ways, all without departing from the spirit or scope of the present invention.

In the drawings, the dimensions of layers or regions may be exaggerated for clarity of description. It will be understood that when a layer or element is referred to as being "on" another layer or substrate, it may be directly on the other layer or element or intervening layers or elements may be present. In addition, it will be understood that when a layer is referred to as being "under" another layer, it may be directly under the other layer or one or more intervening layers may be present. Moreover, it will be understood that when a layer is referred to as being "between" two layers, there may be only one layer between the two layers or one or more intervening layers may be present. In the drawings and description, like reference numerals designate like elements throughout the specification.

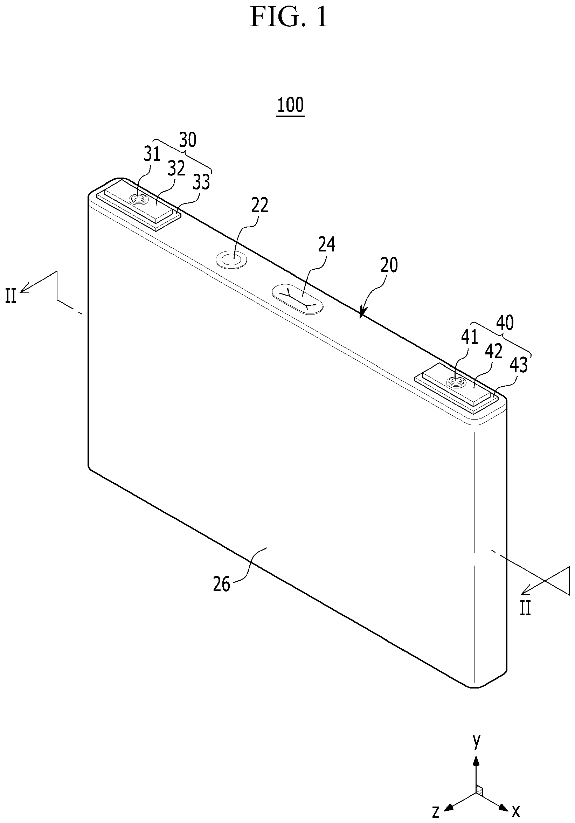

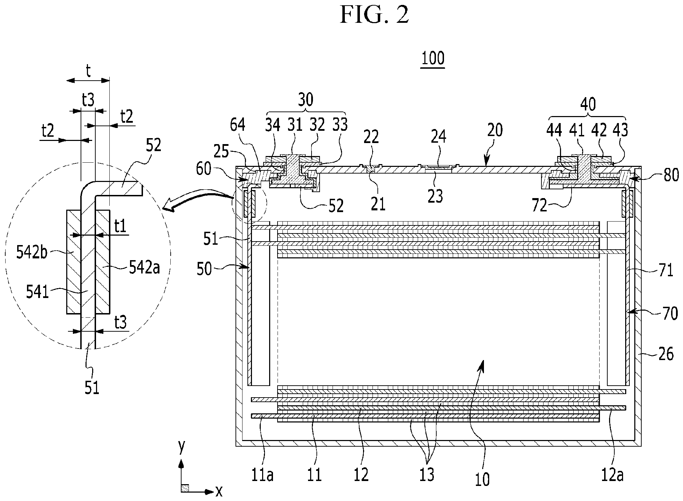

FIG. 1 is a perspective view showing a rechargeable battery according to a first exemplary embodiment of the present invention. FIG. 2 is a cross-sectional view taken along the line II-II of FIG. 1.

Referring to FIGS. 1 and 2, a rechargeable battery 100 according to the present exemplary embodiment includes an electrode assembly 10 formed by interposing a separator 13 between a first electrode 11 and a second electrode 12 and winding the separator 13, a case 26 in which the electrode assembly 10 is received, a first terminal unit 30 and a second terminal unit 40 connected to the electrode assembly 10 and a first current collector 50 or a second current collector 70, a cap plate 20 fastened to an opening formed in the case 26, and first and second insulating members 60 and 80 provided in the case 26.

The rechargeable battery 100 according to the present exemplary embodiment will be described with reference to an example of an angular shape as a lithium ion rechargeable battery.

However, embodiments of the present invention is not limited thereto, but may be, for example, applied to a cylindrical battery or other types of battery.

Further, the first electrode 11 may be constituted by a cathode and the second electrode 12 may be constituted by an anode. In other embodiments, the first electrode 11 may be constituted by the anode and the second electrode 12 may be constituted by the cathode.

The electrode assembly 10 may have a jelly roll shape by winding the first electrode 11, the second electrode 12, and the separator 13 together.

The first electrode 11 and the second electrode 12 may include the first and the second current collectors 50 and 70 each including a metal foil of a thin plate, and an active material applied on a surface of each of the first and the second current collectors 50 and 70. Further, the first electrode 11 and the second electrode 12 may be divided into coating portions in which the active material is applied on the first and the second current collectors 50 and 70, and a first electrode uncoated region 11a and a second electrode uncoated region 12a in which the active material is not applied on the first and the second current collectors 50 and 70.

However, the present invention is not limited thereto, and the electrode assembly 10 may have a structure in which the first electrode 11 and the second electrode 12 including a plurality of sheets are laminated with the separator 13 interposed therebetween.

The first terminal unit 30 may be electrically connected to the first electrode uncoated region 11a of the electrode assembly 10 through a medium of the first current collector 50. The second terminal unit 40 may be electrically connected to the second electrode uncoated region 12a through a medium of the second current collector 70.

Further, the first and the second terminal units 30 and 40 may be positioned at ends of opposite sides of the cap plate 20 and provided through the cap plate 20 to be exposed to the outside of the rechargeable battery 100.

The cap plate 20 includes a thin board, and is fastened to the opening of the case 26 to seal the case 26 after the electrode assembly 10 is received in the case 26.

Herein, the case 26 having the angular shape according to this embodiment of the present invention is illustrated as an example. However, the shape of the case 26 in embodiments of the invention is not limited to such an angular shape, and the case 26 may have a cylindrical or other shape in other embodiments of the invention.

An electrolyte injection opening 21 through which an electrolyte solution is injected into the sealed case 26 is formed through the cap plate 20. The electrolyte injection opening 21 may be sealed by a sealing stopper 22 after the electrolyte solution is injected.

Further, a vent hole 23 where a vent plate 24 broken (i.e. opended) when internal pressure of the sealed case 26 is a predetermined pressure or more is provided may be formed through the cap plate 20.

The first and the second terminal units 30 and 40 may include first and second rivets 31 and 41, first and second terminal plates 32 and 42, a first terminal insulating member 33 and a conductive connection member 43 provided between the first and the second terminal plates 32 and 42 and the cap plate 20, and first and second gaskets 34 and 44.

According to the present exemplary embodiment, the cap plate 20 may be electrically connected to the second terminal unit 40 by the conductive connection member 43. Therefore, the cap plate 20 can have the polarity of the cathode or the anode.

Further, the first and the second current collectors 50 and 70 include first portions 51 and 71 coupled with the first and the second electrodes 11 and 12 and second portions 52 and 72 coupled with the first and the second terminal units 30 and 40.

Further, the insulating member can be provided between the cap plate 20 and the second rivet 41 instead of the conductive connection member 43. In such a case, the cap plate 20 may not be electrically connected to the second terminal unit 40.

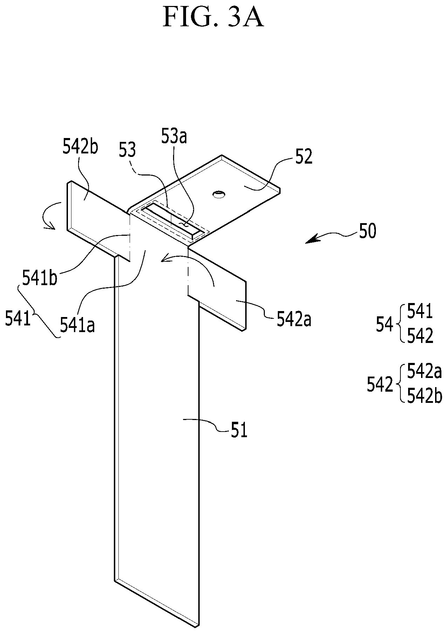

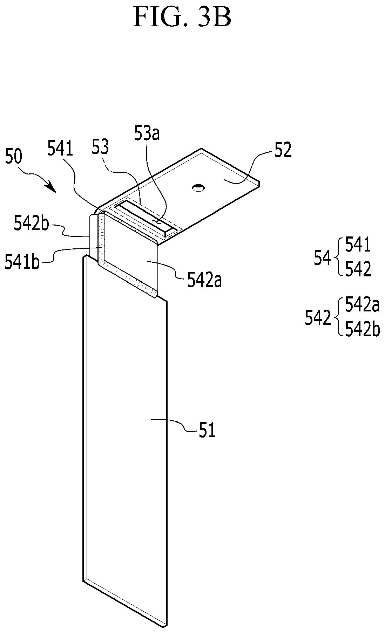

FIGS. 3A and 3B are perspective views of a current collector according to the first exemplary embodiment of the present invention.

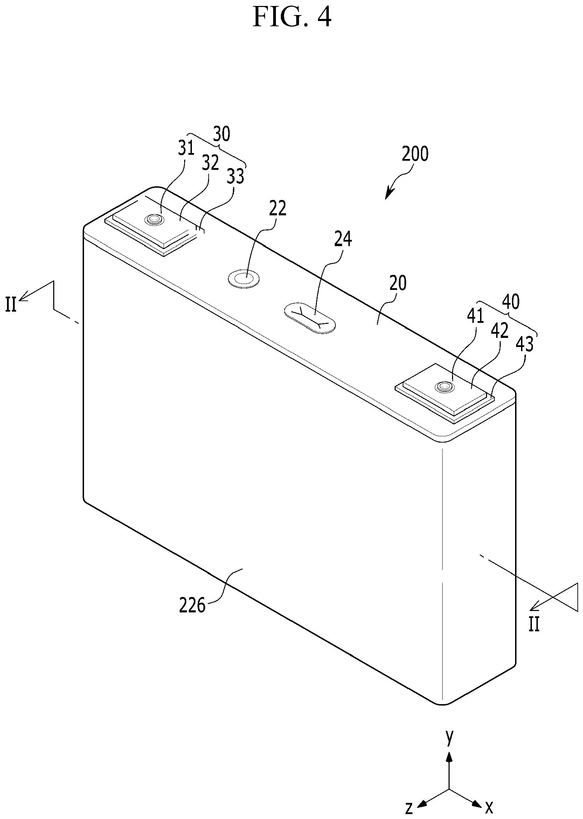

Referring to FIGS. 3 and 4, the first current collector 50 according to the exemplary embodiment of the present invention includes the first portion 51 coupled with the first uncoated region 11a of the electrode assembly 10, the second portion 52 coupled with the terminal unit 30 and including a fuse portion 53 through which a fuse hole 53a is formed, and a connection unit 54 positioned between the first portion 51 and the second portion 52 to couple the first portion 51 and the second portion 52.

Herein, the first current collector 50 and the second current collector 70 according to the present exemplary embodiment may have the same structure. Accordingly, hereinafter, a detailed description of the second current collector 70 will be omitted.

Referring back to FIG. 2, a thickness t of the connection unit 54 according to the present exemplary embodiment is larger than a thickness t3 of the first portion 51.

Herein, the thickness of the second portion 52 according to the present exemplary embodiment is the same as the thickness t3 of the first portion 51.

Further, the thickness t of the connection unit 54 according to the present exemplary embodiment is larger than the thickness of the second portion 52.

In more detail, the connection unit 54 according to the present exemplary embodiment includes a body 541 connecting the first portion 51 and the second portion 52, and a reinforcement member 542 coupled with the body 541.

Herein, the thickness of the reinforcement member 542 according to the present exemplary embodiment may be the same as a thickness t1 of the body 541.

The reinforcement member 542 according to the present exemplary embodiment extends from the body 541 and is then bent to be coupled with the body 541.

In this case, the body 541 and the reinforcement member 542 may be coupled by a method such as riveting, caulking, and welding.

Further, the reinforcement member 542 according to the present exemplary embodiment may include one or more of a first reinforcement member 542a coupled with a first surface 541a of the body 541, and a second reinforcement member 542b coupled with a second surface 541b positioned at an opposite side of the first surface 541a of the body 541 and facing an internal wall of the case 26.

In more detail, the first reinforcement member 542a according to the present exemplary embodiment may extend in a direction parallel to the first surface 541a and the second surface 541b between the first surface 541a and the second surface 541b of the body 541 and be then bent (or folded) to be coupled with the first surface 541a of the body 541.

Further, the second reinforcement member 542b according to the present exemplary embodiment may be coupled to the body 541 from a side opposite the first reinforcement member 542a, and extend in a direction parallel to the first reinforcement member 542a and then bend (or fold) to be coupled with the second surface 541b of the body.

According to the present exemplary embodiment, a sum of the thickness t1 of the body and the thickness t2 of the first and the second reinforcement members 542a and 542b can be considered to be the thickness t of the connection unit 54 of the first current collector 50.

Herein, the thickness t3 of the first portion 51 and the second portion 52 of the first current collector 50 is the same as the thickness t1 of the body 541.

Further, the thickness t2 of the first and the second reinforcement members 542a and 542b may be the same as or smaller than the thickness t3 of the first and the second portions 51 and 52.

Alternatively, the thickness t2 of the first and the second reinforcement members 542a and 542b may be larger than the thickness t3 of the first and the second portions 51 and 52.

Accordingly, the thickness t of the connection unit 54 according to the present exemplary embodiment is larger than the thickness of the first portion 51 and the second portion 52 with the exception of the connection unit 54 in the first current collector 50.

For example, when the thickness t2 of the first and the second reinforcement members 542a and 542b is the same as the thickness t3 of the first and the second portions 51 and 52, the thickness t of the connection unit 54 is almost three times larger than the thickness of the first and the second portions 51 and 52.

In some embodiments, a thickness of the body 541 is the same as or greater than the thickness of the first portion 54.

A heat capacity is a capacity required to increase a temperature of a predetermined material by 1°C or 1K, and a size of the heat capacity is proportional to a mass.

Accordingly, the thickness t of the connection unit 54 of the first current collector 50 is larger than the thickness t3 of the first and the second portions 51 and 52 and the mass of the connection unit 54 is larger than that of the first and the second portions 51 and 52. Therefore, the heat capacity of the connection unit 54 is larger than the heat capacity of the first and the second portions 51 and 52.

Further, the thermal conductivity means a property to conduct heat. The thermal conductivity may be represented by a thermal conductive ratio, and the thermal conductive ratio is proportional to an area of a surface of an object.

Accordingly, a surface area of the connection unit 54 of the first current collector 50 is larger than the surface area of the first and the second portions 51 and 52 by approximately a cross-sectional area of the reinforcement member 542. Therefore, the thermal conductivity of the connection unit 54 is greater than the thermal conductivity of the first and the second portions 51 and 52.

The connection unit 54 according to the present exemplary embodiment connects the first portion 51 that is a portion in which the first current collector 50 and the electrode assembly 10 are coupled and the second portion 52 that is a portion coupled with the first terminal unit 30, and is positioned in the case 26 sealed by the cap plate 20.

When the rechargeable battery 100 is charged at a high voltage or discharged at a high voltage, an overcurrent that is larger than an allowable current capable of being received in the electrode assembly 10 or the first terminal unit 30 per unit time may be supplied to the rechargeable battery 100.

When the rechargeable battery is charged or discharged with the overcurrent, a residual current other than the allowable current supplied to the electrode assembly 10 or the first terminal unit 30 is not supplied to the electrode assembly 10 or the first terminal unit 30.

Therefore, the residual current remains in the connection unit 54 positioned between the first portion 51 and the second portion 52 of the first current collector 50.

Accordingly, heat that is hotter than that of the first portion 51 and the second portion 52 is generated due to the residual current in the connection unit 54 of the first current collector 50. Therefore, damage or deformation may occur due to heat of the connection unit 54.

The heat capacity of the connection unit 54 according to the present exemplary embodiment is larger than the heat capacity of the first portion 51 and the second portion 52, and the thermal conductivity of the connection unit 54 is larger than that of the first portion 51 and the second portion 52. Accordingly, the connection unit 54 may not be easily heated and heat generated from the connection unit 54 may be rapidly emitted.

Therefore, according to the present exemplary embodiment, even though charging and discharging of the rechargeable battery 100 are repeated, the connection unit 54 of the first current collector 50 may be reduced (or prevented) from being damaged or deformed.

Further, the connection unit 54 according to the present exemplary embodiment is not physically coupled with the electrode assembly 10 and the first terminal unit 30. Accordingly, the connection unit 54 may be damaged or deformed due to an external impact applied to the rechargeable battery 100.

According to the present exemplary embodiment, the thickness t of the connection unit 54 is larger than the thickness t3 of the first portion 51 and the second portion 52. Therefore, durability of the connection unit 54 is increased.

Therefore, according to the present exemplary embodiment, even though the external impact is applied to the rechargeable battery 100, the connection unit 54 of the first current collector 50 may be prevented from being damaged or deformed.

As discussed above, this embodiment comprises a terminal unit 30 electrically connected to the electrode assembly 10 via a current collector 50. The current collector 50 comprises a first portion 51 coupled with the electrode assembly 10, a second portion 52 coupled with the terminal unit 30, and a connection portion 54 between the first portion 5 and the second portion 52 electrically connecting the first portion 51 and the second portion 52. The thickness of the connection portion 54 is greater than a thickness of the first portion 51.

In this embodiment, the connection portion 54 comprises a body 541 and a reinforcement member 542. The thickness of the connection portion 54 may be substantially equal to the sum of a thickness of the body 541 and a thickness of the reinforcement member 542. The thickness of the body 541 may be the same as or greater than the thickness of the first portion 54.

In this embodiment, the reinforcement member 542 comprises a first reinforcement portion 542a that extends from a first side of the body 541 and is configured to be coupled with a first surface 541a of the body 541. In some embodiments, the thickness of the first reinforcement portion is the same as a thickness of the body. A thickness of the first reinforcement portion 542a may be the same as a thickness of the body.

In this embodiment, the reinforcement member 542 further comprises a second reinforcement portion 542b that extends from a second side of the body 541 and is configured to be coupled with a second surface 541b of the body 541 opposite the first surface 541a. A thickness of the second reinforcement portion 542b may be the same as a thickness of the body 541.

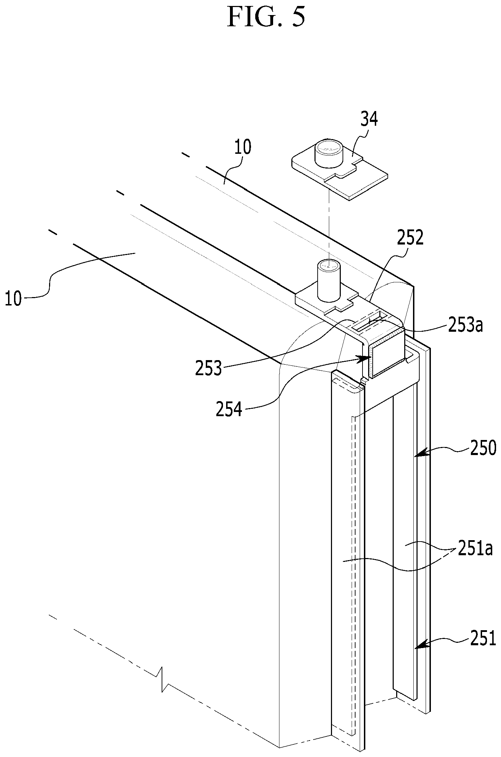

FIG. 4 is a perspective view of a rechargeable battery according to a second exemplary embodiment of the present invention. FIG. 5 is a partially exploded perspective view of the rechargeable battery according to the second exemplary embodiment of the present invention.

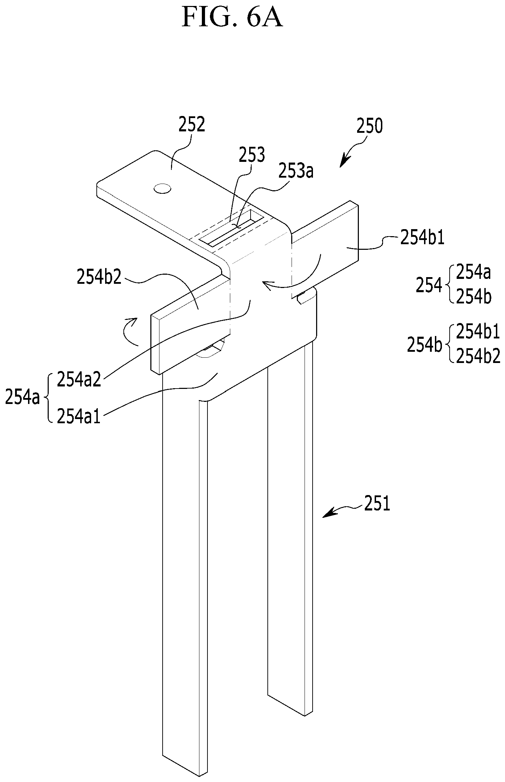

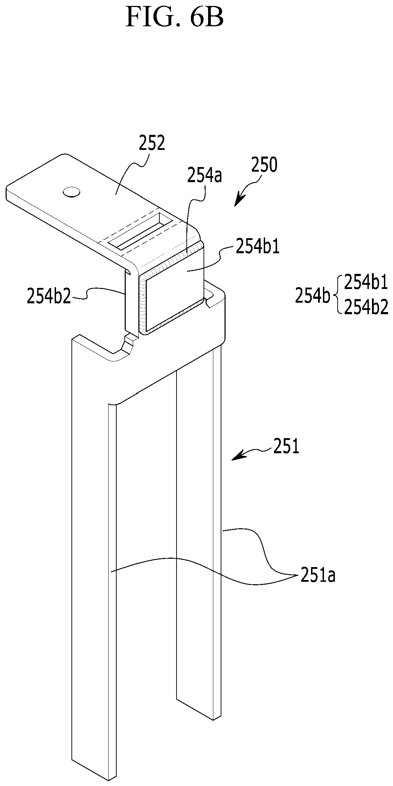

Further, FIGS. 6A and 6B are perspective views of a first current collector according to the second exemplary embodiment of the present invention.

Referring to FIGS. 4 to 6B, a rechargeable battery 200 according to the present exemplary embodiment has the same constitution as the rechargeable battery 100 according to the first exemplary embodiment of the present invention with the exception of a first current collector 250.

Accordingly, hereinafter, a detailed description of the same constitution as the rechargeable battery 100 according to the first exemplary embodiment of the present invention will be omitted.

Referring to FIGS. 4 to 6B, the electrode assembly according to the present exemplary embodiment may include a plurality of electrode assemblies 10.

According to the present exemplary embodiment, as shown in FIG. 5, the two electrode assemblies 10 may be received in the case 26 to constitute the rechargeable battery 200.

Further, the first current collector 250 according to the present exemplary embodiment includes a first portion 251 coupled with the first uncoated region 11a of the electrode assembly 10, a second portion 252 coupled with the terminal unit 30 and including a fuse portion 253 through which a fuse hole 253a is formed, and a connection unit 254 positioned between the first portion 251 and the second portion 252 to couple the first portion 251 and the second portion 252.

Further, the connection unit 254 according to the present exemplary embodiment includes a body 254a connecting the first portion 251 and the second portion 252, and a reinforcement member 254b coupled with the body 254a.

Further, the body 254a according to the present exemplary embodiment includes a first body unit 254a1 connected to the first portion 251 and a second body unit 254a2 connected to the second portion.

Further, the first portion 251 according to the present exemplary embodiment includes a plurality of collector shoes 251a extending from the first body unit 254a1 of the connection unit 254 to be each coupled with a plurality of electrode assemblies 10.

The thickness of the reinforcement member 254b according to the present exemplary embodiment may be the same as the thickness of the body 254a including the first body unit 254a1 and the second body unit 254a2.

The reinforcement member 254b according to the present exemplary embodiment extends from the body 254a and is then bent to be coupled with the body 254a.

Further, the reinforcement member 254b according to the present exemplary embodiment may include one or more of a first reinforcement member 254b1 coupled with a surface of the body 254a, and a second reinforcement member 254b2 coupled with another surface 541b positioned at an opposite side of a first surface 254a of the body 254a and facing an internal wall of the case 26.

Herein, constitutions of the first reinforcement member 254b1 and the second reinforcement member 254b2 according to the present exemplary embodiment are substantially the same as those of the first reinforcement member 542a and the second reinforcement member 542b according to the first exemplary embodiment of the present invention, respectively.

Further, a coupling relationship of each of the first reinforcement member 254b1 and the second reinforcement member 254b2 according to the present exemplary embodiment with the body 254a is substantially the same as a coupling relationship of each of the first reinforcement member 542a and the second reinforcement member 542b according to the first exemplary embodiment of the present invention with the body 541.

Accordingly, hereinafter, a detailed description of the first reinforcement member 254bi and the second reinforcement member 254b2 according to the present exemplary embodiment, and a detailed description of the coupling relationship of the first reinforcement member 254b1 and the second reinforcement member 254b2 with the body 254a will be omitted.

Eventually, according to the present exemplary embodiment, the thickness of the connection unit 254 of the first current collector 250 applied to a plurality of electrode assemblies may be set to be larger than the thickness of the first portion 251 and the second portion 252 of the first current collector, thus increasing the heat capacity, the thermal conductivity, and the durability of the connection unit 254 of the first current collector 250.

Accordingly, the heat capacity of the connection unit 254 according to the present exemplary embodiment is larger than the heat capacity of the first portion 251 and the second portion 252, and the thermal conductivity of the connection unit 254 is larger than that of the first portion 251 and the second portion 252. Accordingly, the connection unit 254 may not be easily heated and heat generated from the connection unit 254 may be rapidly emitted.

Therefore, according to the present exemplary embodiment, even though charging and discharging of the rechargeable battery 200 are repeated, the connection unit 254 of the first current collector 250 may be prevented from being damaged or deformed.

Further, according to the present exemplary embodiment, even though the external impact is applied to the rechargeable battery 200, the connection unit 254 of the first current collector 250 may be prevented from being damaged or deformed.

Hence, in this embodiment, the rechargeable battery comprises a plurality of electrode assemblies 10, and the body 254a of the connection portion 254 comprises a first body portion 254a1 connected to the first portion 251 of the current collector 250, and a second body portion 254a2 connected to the second portion 252 of the current collector 250. In this embodiment, the first portion 251 of the current collector 250 includes a plurality of collector shoes 251a extending from the first body portion 254a1, each collector shoe 251a being respectively coupled to one of the electrode assemblies 10.

In this embodiment, the reinforcement member 254b comprises a first reinforcement portion 254b1 that extends from a first side of the first body portion 254a1 and is configured to be coupled with a first surface of the body 254a. In some embodiments, a thickness of the first reinforcement portion 254b1 is the same as a thickness of the body 254a. In some embodiments, the thickness of the first reinforcement portion 254b1 is the same as a thickness of the body 254a.

In this embodiment, the reinforcement member 254b further comprises a second reinforcement portion 254b2 that extends from a second side of the first body portion 254a1 and is configured to be coupled with a second surface of the body 254a opposite the first surface. In some embodiments, the thickness of the second reinforcement portion 254b2 is the same as a thickness of the body 245a.

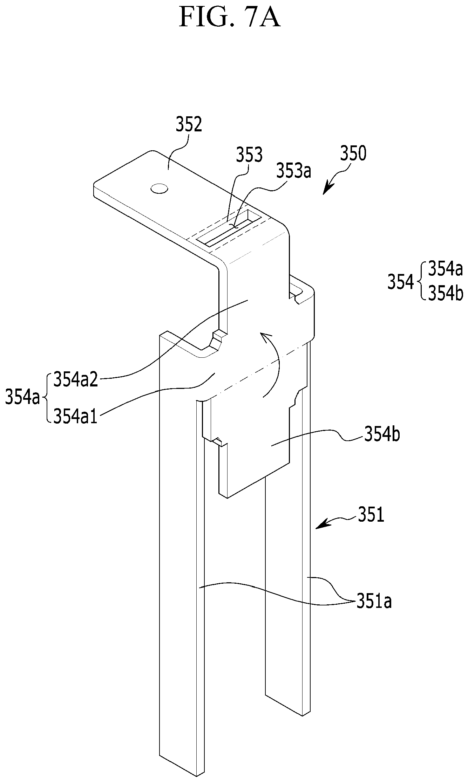

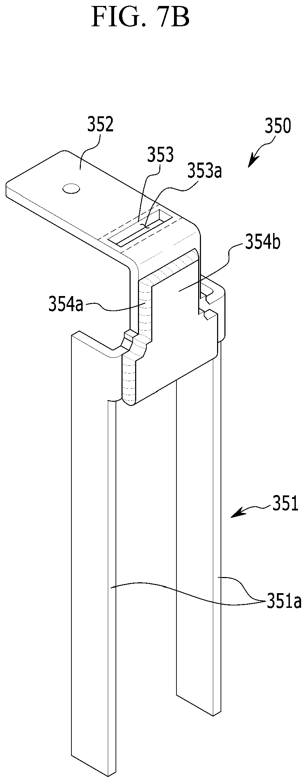

FIGS. 7A and 7B are perspective views of a first current collector according to a third exemplary embodiment of the present invention.

Referring to FIGS. 7A and 7B, the rechargeable battery according to the present exemplary embodiment has the same constitution as the rechargeable battery 200 according to the second exemplary embodiment of the present invention with the exception of the first current collector 350. Accordingly, a detailed description of the same constitution as the rechargeable battery 200 according to the second exemplary embodiment of the present invention will be hereinafter omitted.

The first current collector 350 according to the present exemplary embodiment includes a first portion 351 coupled with the first uncoated region 11a of the electrode assembly 10, a second portion 352 coupled with the terminal unit 30 and including a fuse portion 353 through which a fuse hole 353a is formed, and a connection unit 354 positioned between the first portion 351 and the second portion 352 to couple the first portion 351 and the second portion 352.

Further, the connection unit 354 according to the present exemplary embodiment includes a body 354a connecting the first portion 351 and the second portion 352, and a reinforcement member 354b coupled with the body 354a.

Further, the body 354a according to the present exemplary embodiment includes a first body unit 354a1 connected to the first portion 351 and a second body unit 354a2 connected to the second portion 352.

Further, the first portion 351 according to the present exemplary embodiment includes a plurality of collector shoes 351a extending from the first body unit 354a1 of the connection unit 354 to be each coupled with a plurality of electrode assemblies 10.

The thickness of the reinforcement member 354b according to the present exemplary embodiment may be the same as the thickness of the body 354a including the first body unit 354a1 and the second body unit 354a2.

The reinforcement member 354b according to the present exemplary embodiment extends in a direction parallel to the collector shoes 351a in the first body unit 354a1 and is then bent (or fold) to be coupled with the body 354a.

Herein, the reinforcement member 354b according to the present exemplary embodiment may have a shape corresponding to the shape of the body 354a including the first body unit 354a1 and the second body unit 354a2.

Therefore, according to the present exemplary embodiment, each of the first body unit 354a1 and the second body unit 354a2 of the connection unit 354 is coupled with the reinforcement member 354b. Accordingly, the total thickness of the connection unit 354 is approximately doubled.

Eventually, according to the present exemplary embodiment, the thickness of the connection unit 354 of the first current collector 350 applied to a plurality of electrode assemblies may be set to be larger than the thickness of the first portion 351 and the second portion 352 of the first current collector, thus increasing the heat capacity, the thermal conductivity, and the durability of the connection unit 354 of the first current collector 350.

Therefore, the heat capacity of the connection unit 354 according to the present exemplary embodiment is larger than the heat capacity of the first portion 351 and the second portion 352, and the thermal conductivity of the connection unit 354 is larger than that of the first portion 351 and the second portion 352. Accordingly, the connection unit 354 may not be easily heated and heat generated from the connection unit 354 may be rapidly emitted.

Therefore, according to the present exemplary embodiment, even though charging and discharging of the rechargeable battery 300 are repeated, the connection unit 354 of the first current collector 350 may be prevented from being damaged or deformed.

Hence, in this embodiment, the reinforcement member 354b comprises a reinforcement portion that extends from a side of the second body portion 354a2 and is configured to be coupled with a first surface of the body 354a. In some embodiments, the thickness of the reinforcement portion is the same as a thickness of the body 354a.

Further, according to the present exemplary embodiment, even though the external impact is applied to the rechargeable battery 200, the connection unit 354 of the first current collector 350 may be prevented from being damaged or deformed.

As discussed, embodiments of the present invention provide a rechargeable battery, comprising: an electrode assembly; and a terminal unit electrically connected to the electrode assembly via a current collector, wherein the current collector comprises: a first portion coupled with the electrode assembly; a second portion coupled with the terminal unit; and a connection portion between the first portion and the second portion electrically connecting the first portion and the second, wherein a thickness of the connection portion is greater than a thickness of the first portion.

In some embodiments, the thickness of the connection portion is greater than a thickness of the second portion.

The connection portion comprises a body and a reinforcement member. The thickness of the connection portion may be substantially equal to the sum of a thickness of the body and a thickness of the reinforcement member. A thickness of the body may be the same as or greater than the thickness of the first portion.
In some embodiments, the connection portion has a thermal conductivity that is higher than a thermal conductivity of the first portion. In some embodiments, the connection portion has a thermal conductivity that is higher than a thermal conductivity of the second portion.

In some embodiments, the second portion comprises a fuse portion. In some embodiments, the fuse portion comprises a fuse hole.

## Claims

1. A rechargeable battery (100, 200, 300), comprising:
an electrode assembly (10); and
a terminal unit (30, 40) connected to the electrode assembly (10) via a current collector (50, 70, 250, 350), wherein the current collector (50, 70, 250, 350) comprises:
a first portion (51, 71, 251, 351) coupled with the electrode assembly (10);
a second portion (52, 72, 252, 352) coupled with the terminal unit (30, 40); and
a connection portion (54, 254, 354) between the first portion (51, 71, 251, 351) and the second portion (52, 72, 252, 352) connecting the first portion (51, 71, 251, 351) and the second portion (52, 72, 252, 352), wherein a thickness of the connection portion (54, 254, 354) is greater than a thickness of the first portion (51, 71, 251, 351);
wherein the connection portion (54, 254, 354) comprises a body (541, 254a, 354a) and a reinforcement member (542, 254b, 354b);
**characterised in that** the reinforcement member comprises a reinforcement portion that extends from a side of the body and is folded to be coupled with a first surface of the body.

2. The rechargeable battery (100, 200, 300) of claim 1, wherein the thickness (t) of the connection portion (54, 254, 354) is greater than a thickness of the second portion (52, 72, 252, 352).

3. The rechargeable battery (100, 200, 300) of claim 1 or 2, wherein the thickness of the connection portion (54, 254, 354) is substantially equal to the sum of a thickness (t1) of the body (541, 254a, 354a) and a thickness (t2) of the reinforcement member (542, 254b, 354b).

4. The rechargeable battery (100, 200, 300) of any one of claims 1 to 3, wherein a thickness of the body (541, 254a, 354a) is the same as or greater than the thickness of the first portion (54, 254, 354).

5. The rechargeable battery (100) of any one of claims 1 to 4, wherein the reinforcement portion is a first reinforcement portion (542a) that extends from a first side of the body (541) and is configured to be coupled with the first surface (541a) of the body (541); optionally wherein a thickness of the first reinforcement portion (542a) is the same as a thickness of the body (541).

6. The rechargeable battery (100) of claim 5, wherein the reinforcement member (542) further comprises a second reinforcement portion (542b) that extends from a second side of the body (541) and is configured to be coupled with a second surface (541b) of the body (541) opposite the first surface (541a); optionally wherein a thickness of the second reinforcement portion (542b) is the same as a thickness of the body (541).

7. The rechargeable battery (200, 300) of any one of claims 1 to 4, further comprising a plurality of electrode assemblies (10), wherein the body (254a, 354a) of the connection portion (254, 352) further comprises:
a first body portion (254a1, 354a1) connected to the first portion (251, 351) of the current collector (250, 350); and
a second body portion (254a2, 354a2) connected to the second portion (252, 352) of the current collector (250, 350);
wherein the first portion (251, 351) of the current collector (250, 350) includes a plurality of collector shoes (251a, 351a) extending from the first body portion (254a1, 354a1), each collector shoe (251a, 351a) being respectively coupled to one of the electrode assemblies (10).

8. The rechargeable battery (200) of claim 7, wherein the reinforcement portion is a first reinforcement portion (254b1) that extends from a first side of the second body portion (254a2) and is configured to be coupled with the first surface of the body (254a); optionally wherein a thickness of the first reinforcement portion (254b1) is the same as a thickness of the body (254a).

9. The rechargeable battery (200) of claim 8, wherein the reinforcement member (254b) further comprises a second reinforcement portion (254b2) that extends from a second side of the second body portion (254a2) and is configured to be coupled with a second surface of the body (254a) opposite the first surface; optionally wherein a thickness of the second reinforcement portion (254b2) is the same as a thickness of the body (245a).

10. The rechargeable battery (300) of claim 7, wherein the reinforcement portion extends from a side of the first body portion (354a1) and is configured to be coupled with the first surface of the body (354a); optionally wherein a thickness of the reinforcement portion is the same as a thickness of the body (354a).

11. The rechargeable battery (100, 200, 300) of any one of claims 1 to 10, wherein the connection portion (54, 254, 354) has a thermal conductivity that is higher than a thermal conductivity of the first portion (51, 71, 251, 351).

12. The rechargeable battery (100, 200, 300) of any one of claims 1 to 11, wherein the connection portion (54, 254, 354) has a thermal conductivity that is higher than a thermal conductivity of the second portion (52, 72, 252, 352).

13. The rechargeable battery (100, 200, 300) of any one of claims 1 to 12, wherein the second portion (52, 72, 252, 352) comprises a fuse portion (53, 253, 353), optionally wherein the fuse portion (53, 253, 353) comprises a fuse hole (53a, 253a, 353a).

## Patentansprüche

1. Wiederaufladbare Batterie (100, 200, 300), umfassend:
eine Elektrodenanordnung (10) und
eine Anschlusseinheit (30, 40), die über einen Stromkollektor (50, 70, 250, 350) mit der Elektrodenanordnung (10) verbunden ist, wobei der Stromkollektor (50, 70, 250, 350) Folgendes umfasst:
einen ersten Abschnitt (51, 71, 251, 351), der mit der Elektrodenanordnung (10) gekoppelt ist;
einen zweiten Abschnitt (52, 72, 252, 352), der mit der Anschlusseinheit (30, 40) gekoppelt ist; und
einen Verbindungsabschnitt (54, 254, 354) zwischen dem ersten Abschnitt (51, 71, 251, 351) und dem zweiten Abschnitt (52, 72, 252, 352), der den ersten Abschnitt (51, 71, 251, 351) und den zweiten Abschnitt (52, 72, 252, 352) verbindet, wobei eine Dicke des Verbindungsabschnitts (54, 254, 354) größer als eine Dicke des ersten Abschnitts (51, 71, 251, 351) ist;
wobei der Verbindungsabschnitt (54, 254, 354) einen Körper (541, 254a, 354a) und ein Verstärkungsglied (542, 254b, 354b) umfasst;
**dadurch gekennzeichnet, dass** das Verstärkungsglied einen Verstärkungsabschnitt umfasst, der sich von einer Seite des Körpers erstreckt und gefaltet ist, um mit einer ersten Fläche des Körpers gekoppelt zu sein.

2. Wiederaufladbare Batterie (100, 200, 300) nach Anspruch 1, wobei die Dicke (t) des Verbindungsabschnitts (54, 254, 354) größer als eine Dicke des zweiten Abschnitts (52, 72, 252, 352) ist.

3. Wiederaufladbare Batterie (100, 200, 300) nach Anspruch 1 oder 2, wobei die Dicke des Verbindungsabschnitts (54, 254, 354) im Wesentlichen gleich der Summe einer Dicke (t1) des Körpers (541, 254a, 354a) und einer Dicke (t2) des Verstärkungsglieds (542, 254b, 354b) ist.

4. Wiederaufladbare Batterie (100, 200, 300) nach einem der Ansprüche 1 bis 3, wobei eine Dicke des Körpers (541, 254a, 354a) so groß wie oder größer als die Dicke des ersten Abschnitts (54, 254, 354) ist.

5. Wiederaufladbare Batterie (100) nach einem der Ansprüche 1 bis 4, wobei der Verstärkungsabschnitt ein erster Verstärkungsabschnitt (542a) ist, der sich von einer ersten Seite des Körpers (541) erstreckt und gestaltet ist, mit der ersten Fläche (541a) des Körpers (541) gekoppelt zu sein; wobei optional eine Dicke des ersten Verstärkungsabschnitts (542a) so groß wie eine Dicke des Körpers (541) ist.

6. Wiederaufladbare Batterie (100) nach Anspruch 5, wobei das Verstärkungsglied (542) ferner einen zweiten Verstärkungsabschnitt (542b) umfasst, der sich von einer zweiten Seite des Körpers (541) erstreckt und gestaltet ist, mit einer der ersten Fläche (541 a) gegenüberliegenden zweiten Fläche (541 b) des Körpers (541) gekoppelt zu sein; wobei optional eine Dicke des zweiten Verstärkungsabschnitts (542b) so groß wie eine Dicke des Körpers (541) ist.

7. Wiederaufladbare Batterie (200, 300) nach einem der Abschnitte 1 bis 4, ferner umfassend eine Mehrzahl von Elektrodenanordnungen (10), wobei der Körper (254a, 354a) des Verbindungsabschnitts (254, 352) ferner Folgendes umfasst:
einen ersten Körperabschnitt (254a1, 354a1), der mit dem ersten Abschnitt (251, 351) des Stromkollektors (250, 350) gekoppelt ist; und
einen zweiten Körperabschnitt (254a2, 354a2), der mit dem zweiten Abschnitt (252, 352) des Stromkollektors (250, 350) gekoppelt ist;
wobei der erste Abschnitt (251, 351) des Stromkollektors (250, 350) eine Mehrzahl von Kollektorschuhen (251 a, 351 a) beinhaltet, die sich vom ersten Körperabschnitt (254a1, 354a1) erstreckt, wobei jeder Kollektorschuh (251 a, 351 a) jeweils mit einer der Elektrodenanordnungen (10) gekoppelt ist.

8. Wiederaufladbare Batterie (200) nach Anspruch 7, wobei der Verstärkungsabschnitt ein erster Verstärkungsabschnitt (254b1) ist, der sich von einer ersten Seite des zweiten Körperabschnitts (254a2) erstreckt und gestaltet ist, mit der ersten Fläche des Körpers (254a) gekoppelt zu sein; wobei optional eine Dicke des ersten Verstärkungsabschnitts (254b1) so groß wie eine Dicke des Körpers (254a) ist.

9. Wiederaufladbare Batterie (200) nach Anspruch 8, wobei das Verstärkungsglied (254b) ferner einen zweiten Verstärkungsabschnitt (254b2) umfasst, der sich von einer zweiten Seite des zweiten Körperabschnitts (254a2) erstreckt und gestaltet ist, mit einer der ersten Fläche gegenüberliegenden zweiten Fläche des Körpers (254a) gekoppelt zu sein; wobei optional eine Dicke des zweiten Verstärkungsabschnitts (254b2) so groß wie eine Dicke des Körpers (245a) ist.

10. Wiederaufladbare Batterie (300) nach Anspruch 7, wobei sich der Verstärkungsabschnitt von einer Seite des ersten Körperabschnitts (354a1) erstreckt und gestaltet ist, mit der ersten Fläche des Körpers (354a) gekoppelt zu sein; wobei optional eine Dicke des Verstärkungsabschnitts so groß wie eine Dicke des Körpers (354a) ist.

11. Wiederaufladbare Batterie (100, 200, 300) nach einem der Ansprüche 1 bis 10, wobei der Verbindungsabschnitt (54, 254, 354) eine Wärmeleitfähigkeit aufweist, die höher als eine Wärmeleitfähigkeit des ersten Abschnitts (51, 71, 251, 351) ist.

12. Wiederaufladbare Batterie (100, 200, 300) nach einem der Ansprüche 1 bis 11, wobei der Verbindungsabschnitt (54, 254, 354) eine Wärmeleitfähigkeit aufweist, die höher als eine Wärmeleitfähigkeit des zweiten Abschnitts (52, 72, 252, 352) ist.

13. Wiederaufladbare Batterie (100, 200, 300) nach einem der Ansprüche 1 bis 12, wobei der zweite Abschnitt (52, 72, 252, 352) einen Sicherungsabschnitt (53, 253, 353) umfasst, wobei der Sicherungsabschnitt (53, 253, 353) optional ein Sicherungsloch (53a, 253a, 353a) umfasst.

## Revendications

1. Batterie rechargeable (100, 200, 300), comprenant :
un ensemble d'électrodes (10) ; et
une unité de borne (30, 40) connectée à l'ensemble d'électrodes (10) par l'intermédiaire d'un collecteur de courant (50, 70, 250, 350), où le collecteur de courant (50, 70, 250, 350) comprend :
une première partie (51, 71, 251, 351) couplée à l'ensemble d'électrodes (10) ;
une deuxième partie (52, 72, 252, 352) couplée à l'unité de borne (30, 40) ; et
une partie de connexion (54, 254, 354) entre la première partie (51, 71, 251, 351) et la deuxième partie (52, 72, 252, 352) connectant la première partie (51, 71, 251, 351) et la deuxième partie (52, 72, 252, 352), où une épaisseur de la partie de connexion (54, 254, 354) est supérieure à une épaisseur de la première partie (51, 71, 251, 351) ;
dans laquelle la partie de connexion (54, 254, 354) comprend un corps (541, 254a, 354a) et un élément de renforcement (542, 254b, 354b) ;
**caractérisée en ce que** l'élément de renforcement comprend une partie de renforcement qui s'étend depuis un côté du corps et qui est pliée pour être couplée à une première surface du corps.

2. Batterie rechargeable (100, 200, 300) de la revendication 1, dans laquelle l'épaisseur (t) de la partie de connexion (54, 254, 354) est supérieure à une épaisseur de la deuxième partie (52, 72, 252, 352).

3. Batterie rechargeable (100, 200, 300) de la revendication 1 ou 2, dans laquelle l'épaisseur de la partie de connexion (54, 254, 354) est sensiblement égale à la somme d'une épaisseur (t1) du corps (541, 254a, 354a) et d'une épaisseur (t2) de l'élément de renforcement (542, 254b, 354b).

4. Batterie rechargeable (100, 200, 300) de l'une quelconque des revendications 1 à 3, dans laquelle une épaisseur du corps (541, 254a, 354a) est identique ou supérieure à l'épaisseur de la première partie (54, 254, 354).

5. Batterie rechargeable (100) de l'une quelconque des revendications 1 à 4, dans laquelle la partie de renforcement est une première partie de renforcement (542a) qui s'étend depuis un premier côté du corps (541) et qui est configurée pour être couplée à la première surface (541a) du corps (541) ; où éventuellement une épaisseur de la première partie de renforcement (542a) est la même qu'une épaisseur du corps (541).

6. Batterie rechargeable (100) de la revendication 5, dans laquelle l'élément de renforcement (542) comprend en outre une deuxième partie de renforcement (542b) qui s'étend depuis un deuxième côté du corps (541) et qui est configurée pour être couplée à une deuxième surface (541b) du corps (541) opposée à la première surface (541a) ; où éventuellement une épaisseur de la deuxième partie de renforcement (542b) est la même qu'une épaisseur du corps (541).

7. Batterie rechargeable (200, 300) de l'une quelconque des revendications 1 à 4, comprenant en outre une pluralité d'ensembles d'électrodes (10), où le corps (254a, 354a) de la partie de connexion (254, 352) comprend en outre :
une première partie de corps (254a, 354a1) connectée à la première partie (251, 351) du collecteur de courant (250, 350) ; et
une deuxième partie de corps (254a2, 354a2) connectée à la deuxième partie (252, 352) du collecteur de courant (250, 350) ;
dans laquelle la première partie (251, 351) du collecteur de courant (250, 350) comporte une pluralité de patins de collecteur (251a, 351a) s'étendant depuis la première partie de corps (254a1, 354a1), chaque patin de collecteur (251a, 351a) étant respectivement couplé à l'un des ensembles d'électrodes (10).

8. Batterie rechargeable (200) de la revendication 7, dans laquelle la partie de renforcement est une première partie de renforcement (254b1) qui s'étend depuis un premier côté de la deuxième partie de corps (254a2) et qui est configurée pour être couplée à la première surface du corps (254a) ; où éventuellement une épaisseur de la première partie de renforcement (254b1) est la même qu'une épaisseur du corps (254a).

9. Batterie rechargeable (200) de la revendication 8, dans laquelle l'élément de renforcement (254b) comprend en outre une deuxième partie de renforcement (254b2) qui s'étend depuis un deuxième côté de la deuxième partie de corps (254a2) et qui est configurée pour être couplée à une deuxième surface du corps (254a) opposée à la première surface ; où éventuellement une épaisseur de la deuxième partie de renforcement (254b2) est la même qu'une épaisseur du corps (245a).

10. Batterie rechargeable (300) de la revendication 7, dans laquelle la partie de renforcement s'étend depuis un côté de la première partie de corps (354a1) et qui est configurée pour être couplée à la première surface du corps (354a) ; où éventuellement une épaisseur de la partie de renforcement est la même qu'une épaisseur du corps (354a).

11. Batterie rechargeable (100, 200, 300) de l'une quelconque des revendications 1 à 10, dans laquelle la partie de connexion (54, 254, 354) présente une conductivité thermique qui est supérieure à une conductivité thermique de la première partie (51, 71, 251, 351).

12. Batterie rechargeable (100, 200, 300) de l'une quelconque des revendications 1 à 11, dans laquelle la partie de connexion (54, 254, 354) présente une conductivité thermique qui est supérieure à une conductivité thermique de la deuxième partie (52, 72, 252, 352).

13. Batterie rechargeable (100, 200, 300) de l'une quelconque des revendications 1 à 12, dans laquelle la deuxième partie (52, 72, 252, 352) comprend une partie de fusible (53, 253, 353), où éventuellement la partie de fusible (53, 253, 353) comprend un trou de fusible (53a, 253a, 353a).
